# EUROPÄISCHE PATENTSCHRIFT

(11) **EP 0 916 569 B1**
(45) Veröffentlichungstag und Bekanntmachung des Hinweises auf die Patenterteilung: **20.03.2002**
(21) Anmeldenummer: 98121146.9
(22) Anmeldetag: 11.11.1998
(51) Int. Cl.: B62D 25/16

(54) **Kotflügel für ein Fahrzeug, insbesondere einen Lastkraftwagen**
Mud-guard for an automotive vehicle, especially for a truck
Garde-boue pour un véhicule automobile, spécialement pour un camion

(30) Priorität: 17.11.1997 DE 19750867
(43) Veröffentlichungstag der Anmeldung: 19.05.1999
(73) Patentinhaber: Sauermann, Franz, 86558 Freinhausen (DE)
(72) Erfinder: Sauermann, Franz, 86558 Freinhausen (DE)
(74) Vertreter: Sasse, Volker, Dipl.-Ing.

(56) Entgegenhaltungen:
- EP-A- 0 088 324
- EP-A- 0 434 540
- DE-A- 4 309 098
- US-A- 4 740 003

## Beschreibung

Die Erfindung betrifft einen Kotflügel gemäß Oberbegriff des Patentanspruchs 1.

Aus der EP 0 434 540 A1 ist ein dreiteiliger Kotflügel bekannt, der aus zwei Endteilen besteht, die von einem Mittelteil überbrückt sind. Die beiden Endteile sind über jeweils ein Kupplungsglied in Form eines Rohres am Fahrzeug gehalten, wobei das Kupplungsglied den Radraum des Kotflügels durchdringt. Das Kupplungsglied ist am Kotflügel mittels Schellen festlegbar, was allerdings vom Radraum her zu erfolgen hat. Der Kotflügel kann daher nur bei abgenommenem Rad montiert werden, wobei ein umständliches Hantieren im Radraum erforderlich ist. Insbesondere beim Wechsel des Kotflügels ergibt sich das Problem, daß die erforderlichen Schraubverbindungen der Schellen aufgrund von Verschmutzung bzw. Korrosion nur schwer lösbar sind. Außerdem besteht die Gefahr, daß das Kupplungsglied durch das im Kotflügel verspritzte Salzwasser verstärkter Korrosion unterworfen ist.

Aus der GB-PS 210 189 ist eine Kotflügelhalterung für ein Fahrzeug bekannt, die von mit dem Kotflügel fest verbundenen Kanälen und darin eingreifenden, an der Karosserie festgelegten Armen gebildet ist. Zur Arretierung des Kotflügels sind Federelemente an den Armen vorgesehen. Zusätzlich läßt sich die Verbindung zwischen den Armen und den Kanälen durch eine Schraubverbindung sichern. Diese Kotflügelhalterung hat jedoch den Nachteil, daß die Schraubverbindung im Kotflügelinneren zu montieren ist, was relativ umständlich ist. Diese bekannte Halterung verbessert zudem die Stabilität des Kotflügels in keiner Weise. Schließlich schützt der Kanal den an der Fahrzeugkarosserie festgelegten Arm nicht vor Spritzwasser, so daß für diesen Arm eine erhöhte Korrosionsgefahr besteht.

Aus der DE 43 09 098 A1 ist ein dreiteiliger Kotflügel bekannt, dessen Endteile von rohrförmigen Tragelementen gehalten werden. Zur Abstützung des Endteils am Tragelement ist am Kotflügel eine Führung eingeformt, entlang der der Kotflügel auf das Tragelement aufgeschoben werden kann. Diese Führung erstreckt sich jedoch nur über einen Teilbereich der Kotflügelbreite, so daß sie den Kotflügel in keiner Weise stabilisieren kann. Außerdem schützt diese Führung das Tragelement nicht vor Spritzwasser, so daß es erhöhter Korrosion ausgesetzt ist.

Aus der EP 0 088 324 A1 ist ein Kotflügel mit den Merkmalen des Oberbegriffs des Anspruchs 1 aus thermoplastischem Kunststoff bekannt, der doppelwandig ausgebildet ist. Zur Aufnahme von Befestigungselementen, insbesondere Bolzen, sind die Außen- und Innenwandung des Kotflügels derart geformt, daß ein rohrförmiger Durchbruch ausgespart ist. In diesen rohrförmigen Durchbruch greift das Befestigungselement ein. Die Wandungen, die den rohrförmigen Durchbruch umgrenzen, sind von den Seitenwänden des Kotflügels beabstandet.

Der Erfindung liegt die Aufgabe zugrunde, einen Kotflügel der eingangs genannten Art zu schaffen, der leicht zu montieren ist und eine erhöhte Festigkeit aufweist. Zusätzlich soll das am Fahrzeug vorgesehene, den Kotflügel haltende Kupplungsglied vor Spritzwasser geschützt sein.

Diese Aufgabe wird erfindungsgemäß mit den Merkmalen der Patentansprüche 1 bzw. 11 gelöst.

Da das Haltemittel als rohrförmige Aussparung in der Kotflügelwandung vorgesehen ist und dabei sich von einer Seitenwand zur anderen Seitenwand erstreckt, so daß diese Ausbildung wie ein in den Kotflügel integriertes Rohr wirkt, ist der Kotflügel besonders steif, selbst wenn er aus weichem Kunststoff oder dünnwandigem Blech erstellt ist. Da das Rohr gleichzeitig als Haltemittel für das Kupplungsglied dient, verursacht diese Stabilisierung des Kotflügels keine zusätzlichen Kosten. Die Montage des Kotflügels am Fahrzeug gestaltet sich überraschend einfach, da lediglich der Kotflügel mit dem das Haltemittel bildenden Rohr bzw. der rohrförmigen Aussparung über das Kupplungsglied, das üblicherweise als Stahlrohr ausgebildet ist, geschoben werden muß. Eine umständliche Montage von Schellen an der Innenseite des Kotflügels kann damit entfallen. Da das Rohr das Kupplungsglied ummantelt, wird das Kupplungsglied besonders wirksam vor abspritzendem Salzwasser geschützt, was zu einer beträchtlichen Verminderung der Korrosionsgefahr des Kupplungsgliedes führt. Dies ist insbesondere dann wichtig, wenn das Kupplungsglied unmittelbar mit dem Fahrzeugrahmen verschweißt ist, da in diesem Fall ein Wechsel des Kupplungsgliedes nur durch aufwendige Schweißarbeiten möglich ist. Zur Vereinfachung der Herstellung des Kotflügels wird dieser zusammen mit dem Rohr einstückig erstellt. Damit entfallen die Arbeitsschritte zur Festlegung des Rohres an den Kotflügelseitenwänden bzw. an der Kotflügelaußenwand, wobei sich ein besonders fester Verband zwischen dem Rohr und dem Kotflügel ergibt.

Um die Montagesicherheit des Kotflügels weiter zu verbessern, wird gemäß Anspruch 2 vorgeschlagen, im Rohr eine Verdrehsicherung für das Kupplungsglied vorzusehen. Diese Verdrehsicherung kann durch jede beliebige, von einer Kreisform abweichende Gestaltung des Rohrquerschnitts erzielt werden. Alternativ könnten auch zusätzliche Haltemittel vorgesehen sein, die die Kotflügelaußenwand durchdringen und das Kupplungsglied festlegen. Durch die Verdrehsicherung wird eine stabilere Aufhängung des Kotflügels erzielt, was insbesondere bei mehrteilig aufgebauten Kotflügeln von besonderer Bedeutung ist.

Eine bevorzugte Ausbildung der Verdrehsicherung ergibt sich aus Anspruch 3. Die in das Rohr eingeformte Nut wirkt formflüssig mit einem axial ausgerichteten Steg des Kupplungsglieds zusammen, so daß sich eine besonders feste Verbindung zwischen beiden ergibt. Hierdurch können Fertigungstoleranzen des Rohrinnendurchmessers leicht ausgeglichen werden, so daß selbst bei geringfügig zu groß dimensioniertem Innendurchmesser des Rohres ein sicherer Halt des Kotflügels am Kupplungsglied nicht beeinträchtigt wird.

Zusätzlich ist es gemäß Anspruch 4 günstig, am Rohr weitere, eine axiale Verschiebung des Kupplungsglieds verhindernde Haltemittel vorzusehen. Diese Haltemittel sind vorzugsweise von Schrauben gebildet, die die Außenwand des Kotflügels und das Rohr durchsetzen und in das Kupplungsglied eindringen. Diese Haltemittel gewährleisten einen festen Sitz des Kotflügels am Kupplungsglied, so daß der Kotflügel keine Eigenschwingungen ausführt, die zu unerwünschten Fahrgeräuschen führen könnten.

Zur weiteren Erhöhung der Steifigkeit des Kotflügels wird gemäß Anspruch 5 vorgeschlagen, das Rohr an mindestens einer Stelle an der Außenwand des Kotflügels festzulegen. Dies ist insbesondere bei sehr breiten Kotflügeln von Bedeutung, die beispielsweise Zwillingsreifen von Fahrzeugen abdecken. Die Verbindung des Rohres mit der Außenwand des Kotflügels verhindert in diesem Fall die Ausbildung von Schwingungen des Kotflügels quer zur Fahrzeuglängsrichtung, die einerseits unerwünschte Fahrgeräusche hervorrufen und andererseits zu einer erheblichen Belastung des Kotflügels führen.

Eine bevorzugte Weiterbildung des Kotflügels ergibt sich aus Anspruch 6. Da das Rohr an Versteifungsrippen der Außenwand des Kotflügels festgelegt ist, kann das Rohr selbst von der Außenwand beabstandet sein, was die Stabilität des gesamten Kotflügels weiter verbessert. Zusätzlich werden die Versteifungsrippen wiederum durch das Rohr stabilisiert, so daß diese keine Eigenbewegung ausführen können. Damit stabilisieren die Versteifungsrippen die Kotflügelaußenwand in besonders günstiger Weise. Vorzugsweise wird eine Versteifungsrippe quer über nahezu den gesamten Kotflügel vorgesehen, so daß sich eine besonders steife Verbindung zwischen dem das Haltemittel bildenden Rohr und der Kotflügelaußenwand ergibt. Dieser horizontalen Versteifungsrippe können mehrere vertikale Versteifungsrippen zugeordnet sein, um die Stabilität des Kotflügels weiter zu verbessern.

Insbesondere, wenn der Kotflügel aus Kunststoff gefertigt ist, ist es gemäß Anspruch 7 zweckmäßig, auch das Rohr aus Kunststoff auszubilden. Hierdurch ergibt sich eine überraschend günstige Gewichtsersparnis des Kotflügels, da von Schellen und Schrauben gebildete Haltemittel etwa 50 % des Gesamtgewichts eines Kunststoffkotflügels ausmachen. Außerdem ist das Kunststoffrohr keiner Korrosionsgefahr ausgesetzt, so daß das im Radraum verspritzte Salzwasser keine negativen Auswirkungen mehr auf ein Teil des Kotflügels hat.

Bevorzugt wird der gesamte Kotflügel gemäß Anspruch 8 nach dem Drehsinterverfahren erstellt, was die Herstellungskosten weiter reduziert. Bei diesem Herstellungsverfahren wird eine Gießform erstellt, deren Innenseite der Außenkontur des Kotflügels entspricht. Diese Gießform weist zusätzlich ein dem Kupplungsglied entsprechendes Formrohr auf, das relativ zur Gießform in axialer Richtung verschiebbar gehalten ist. Diese Gießform wird mit einem Kunststoff-Pulver gefüllt und verschlossen. Anschließend wird die Gießform bis zur Plastifizierungstemperatur des Kunststoff-Pulvers erwärmt und gleichzeitig derart gedreht, daß das Kunststoff-Pulver alle Flächen der Gießform möglichst gleichmäßig bedeckt. Das Pulver haftet an der Innenfläche der Gießform an, wobei sich eine annähernd gleichmäßig dicke Kunststoffschicht an der Innenseite der Gießform bildet. Auf diese Weise wird der gesamte Kotflügel einschließlich des das Haltemittel bildenden Rohres in einem Arbeitsgang erstellt. Nach Entfernen des Formrohres der Gießform kann der fertiggestellte Kotflügel entnommen werden, wobei ggf. nur geringfügige Nachbearbeitungsschritte erforderlich sind.

Um auch bei Anwendung des Drehsinterverfahrens Verbindungsstellen zwischen dem Rohr und der Kotflügelaußenwand realisieren zu können, wird gemäß Anspruch 9 vorgeschlagen, diese in Form von Kiss-Off-Verbindungen auszubilden. Dabei wird die Kotflügelaußenwand bis zum Rohr eingezogen, so daß beide miteinander im Bereich dieser Einziehung (dem Kiss-Off) verbunden sind. Fertigungstechnisch wird die Kiss-Off-Verbindung dadurch realisiert, daß in der Gießform innenseitig ein auf den Gießkern gerichteter Fortsatz vorgesehen ist, der vom Gießkern in etwa um die Wandstärke der zu erstellenden Kunststoffschicht entfernt ist. Dies gewährleistet, daß das Kunststoff-Pulver beim Drehsintervorgang durch den Spalt zwischen dem Gießkern und dem Fortsatz gelangen kann, und trotzdem eine Kunststoffverbindung zwischen dem das Haltemittel bildenden Rohr und dem Kiss-Off gebildet wird.

In der Regel ist das Kupplungsglied ein unmittelbar mit dem Fahrzeugrahmen verschweißtes Stahlrohr, auf das der Kotflügel aufgeschoben wird. Gemäß Anspruch 10 wird vorgeschlagen, das Kupplungsglied in das das Haltemittel bildende Rohr einzuformen, wobei dann das Kupplungsglied unlösbar am Kotflügel aber lösbar am Fahrzeugrahmen befestigt wird. Durch diese Maßnahme wird erreicht, daß das Kupplungsglied im Kotflügel einen besonders festen Halt besitzt, wobei eine Arretierung des Kotflügels in axialer Richtung zum Kupplungsglied beispielsweise durch eine entsprechende axial ausgerichtete Strukturierung des Kupplungsgliedes erfolgen kann. Vorzugsweise wird das Kupplungsglied direkt in die Gießform eingebracht, so daß es formschlüssig das Kupplungsglied ummantelt, wodurch sich ein besonders sicherer Halt des Kotflügels am Kupplungsglied ergibt. Insbesondere wird durch diese Maßnahme das Entformen des Kotflügels erleichtert, da kein Gießkern mehr zu entfernen ist.

Bei mehrteiligen Kotflügeln werden üblicherweise nur die beiden Endteile mit jeweils einem Kupplungsglied am Fahrzeugrahmen gehalten, wobei ein Mittelteil über dehnungselastische Bänder, vorzugsweise Gummibänder, an den Endteilen gehalten ist. Zur Verbesserung der Stabilität dieser Verbindung wird gemäß Anspruch 11 vorgeschlagen, das elastische Band in einer Nut der Außenwand des Endteils zu halten, die mit dem Haltemittel des Kupplungsglieds verbunden ist. Hierdurch ergibt sich eine besonders stabile Festlegung des elastischen Bandes und damit des Mittelteils des Kotflügels. Insbesondere werden hierdurch unerwünschte Schwingungen des Mittelteils zuverlässig unterbunden. Durch die Führung des elastischen Bandes in der Nut ergibt sich ein günstiger Angriffswinkel des Bandes, so daß das Mittelteil optimal gegen die beiden Endteile gezogen wird.

Schließlich ist es gemäß Anspruch 12 vorteilhaft, das elastische Band in einem stumpfen Winkel zu rühren. Hierdurch ergibt sich eine weitere Verbesserung der Haltewirkung des Mittelteils, da das elastische Band sowohl am Endteil als auch am Mittelteil einen günstigeren Angriffswinkel vorfindet. Hierdurch wird die Stabilität des gesamten Kotflügels verbessert.

Eine bevorzugte Ausführungsform des erfindungsgemäßen Kotflügels wird beispielhaft anhand der Zeichnung beschrieben, ohne den Schutzumfang zu beschränken.

Es zeigt:
- Figur 1: eine Schnittdarstellung durch einen Kotflügel,
- Figur 2: eine rückseitige Ansicht des Endteils des Kotflügels gemäß Figur 1 und
- Figur 3: eine Ansicht des Endteils des Kotflügels gemäß Figur 1 von oben.

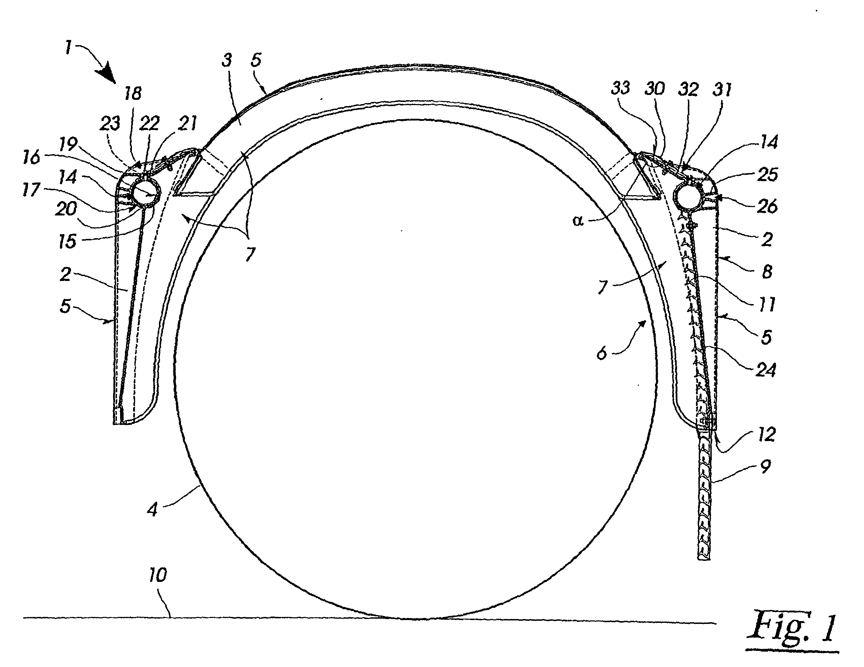

Figur 1 zeigt eine Schnittdarstellung eines Kotflügels 1 aus Kunststoff bestehend aus zwei Endteilen 2 und einem Mittelteil 3. Diese Teile 2, 3 des Kotflügels 1 bestehen im wesentlichen aus einer an die Kontur eines Rades 4 angepaßten Außenwand 5, an die zu einem Radraum 6 gezogene Seitenwände 7 angeformt sind. Die Außenwand 5 der Endteile 2 besitzt einen vertikal verlaufenden Bereich 8, der zur Aufnahme von Fahrzeugkennzeichen, Beleuchtungen oder ähnlichem dient. Am hinteren Endteil 2 ist radraumseitig ein Spritzlappen 9 befestigt, der vom Fahrzeugrad 4 abspritzendes Wasser auffängt und zur Fahrbahn 10 ableitet. Zu diesem Zweck besitzt der Spritzlappen 9 eine Vielzahl von im wesentlichen horizontal verlaufenden Stegen 11, die aufgrund ihrer besonderen Form ein großes Aufnahmevermögen für Spritzwasser aufweisen. Auf diese Weise wird das Auftreten von Gischt unterdrückt. Der Spritzlappen 9 steht bis über das untere Ende 12 des Kotflügels 1 über.

Beide Endteile 2 sind über jeweils ein Kupplungsglied 14 in Form eines Tragrohrs an einem nicht dargestellten Rahmen eines Fahrzeugs gehalten. Zur Verbindung des Kupplungsglieds 14 mit dem Endteil 2 ist in diesem ein Rohr 15 eingeformt, dessen Innenkontur 16 passend zur Außenkontur 17 des Kupplungsglieds 14 ausgebildet ist. Zur Bildung einer Verdrehsicherung 18 zwischen dem Kupplungsglied 14 und dem Rohr 15 ist am Kupplungsglied 14 ein Steg 19 angeformt, der außenseitig über einen Grundkörper 20 mit kreisringförmigem Querschnitt übersteht. Entsprechend ist im Rohr 15 des Endteils 2 eine Nut 21 eingeformt, die passend zum Steg 19 ausgebildet ist.

Zur Arretierung des Endteils 2 am Kupplungsglied 14 in dessen axialer Richtung sind Haltemittel 22 in Form von Schrauben vorgesehen, die die Außenwand 5 des Endteils 2 durchdringen. Diese Haltemittel 22 sind in Gewindebohrungen 23 des Kupplungsgliedes 14 festgelegt, wobei diese Gewindebohrung 23 sowohl den Steg 19 als auch den rohrförmigen Grundkörper 20 durchsetzt. Durch diese Schrauben 22 wird eine besonders feste Verbindung zwischen dem Endteil 2 und dem Kupplungsglied 14 erreicht.

Da diese Schrauben 22 ausschließlich von der Außenseite des Kotflügels 1 in das Kupplungsglied 14 eindringen, kann das vom Rad 4 abgespritzte Wasser nicht zum Kupplungsglied 14 gelangen, so daß dessen Korrosionsgefahr entsprechend reduziert ist. Das abgespritzte Wasser trifft vielmehr auf das Rohr 15, das das Kupplungsglied 14 ummantelt. Da der gesamte Kotflügel einschließlich des Rohres 15 aus Kunststoff gefertigt ist, ergeben sich durch das auf das Rohr 15 auftreffende Spritzwasser keinerlei Korrosionsprobleme.

Zur Versteifung der Kotflügelendteile 2 sind vertikale Versteifungsrippen 24 sowie eine horizontale Versteifungsrippe 25 vorgesehen. Diese Versteifungsrippen 24, 25 sind in Form von Kiss-Off-Verbindungen 26 ausgebildet, so daß eine einfache und damit kostengünstige Erstellung des gesamten Kotflügels 1 nach dem Drehsinterverfahren möglich ist. Die Versteifungsrippen 24, 25 stehen mit dem Rohr 15 in Verbindung, wodurch sich eine besonders gute Steifigkeit des gesamten Kotflügels 1 ergibt.

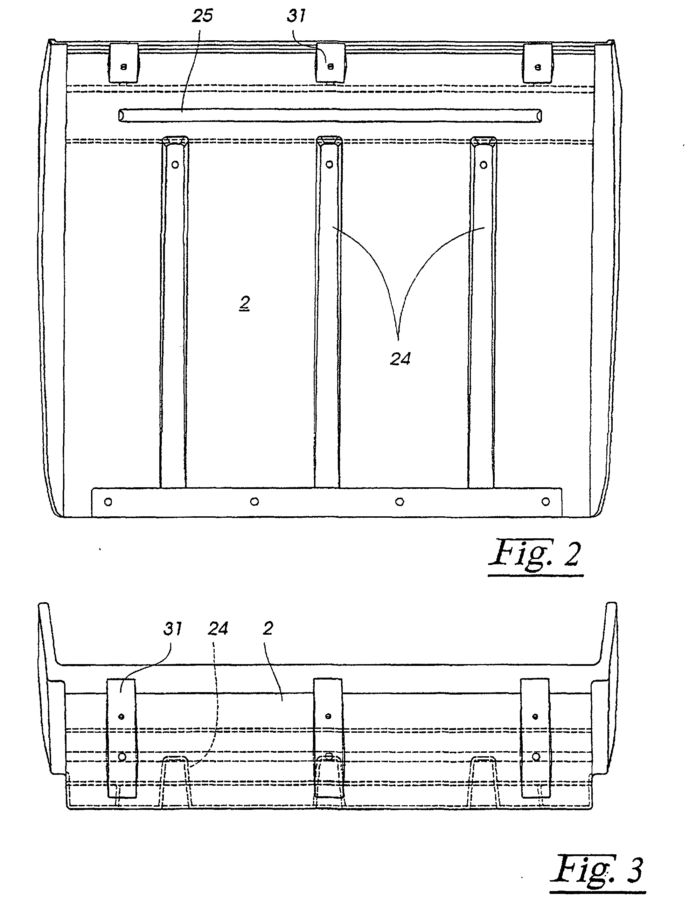

Zur Festlegung des Mittelteils 3 an den beiden Endteilen 2 des Kotflügels 1 sind dehnungselastische Bänder 30 vorgesehen, die in Nuten 31 in der Außenwand 5 des Endteils 2 geführt sind. Diese Nuten 31 sind insbesondere aus den Figuren 2 und 3, die eine Ansicht des Endteils 2 ohne Kupplungsglied 14 von hinten bzw. oben darstellen, zu erkennen. Durch diese Nuten 31 wird das dehnungselastische Band 30 in besonders günstigem Winkel geführt, so daß sich eine stabile und gleichzeitig schwingungsarme Festlegung des Mittelteils 3 an den Endteilen 2 ergibt.

Zur Versteifung des Kotflügels 1 und zur Verbesserung der Verbindung des Mittelteils 3 an den Endteilen 2 ist der Boden 32 der Nut 31 direkt am Rohr 15 angeformt. Hierdurch verteilen sich alle Zug- und Haltekräfte in besonders günstiger Weise ausgehend vom Kupplungsglied 14 über den gesamten Kotflügel 1, ohne daß es dabei zu einer Materialüberbeanspruchung kommt. Um die Kraftwirkung des dehnungselastischen Bandes 30 weiter zu verbessern, wird es über eine Kante 33 des Endteils 2 um einen stumpfen Winkel α geführt. Hierdurch wird ein günstiger Angriffswinkel des dehnungselastischen Bandes 30 an das Mittelteil 3 erreicht, was die Verbindung zwischen beiden Teilen weiter verbessert.

Die bevorzugte Anordnung der Versteifungsrippen 24, 25 ist insbesondere aus den Figuren 2 und 3 ersichtlich, wobei sich die Verwendung von drei zueinander parallelen vertikalen Versteifungsrippen 24 als besonders günstig und trotzdem materialsparend herausgestellt hat. In Abweichung zur Darstellung gemäß Figur 2 könnten die Nuten 31 für die dehnungselastischen Bänder 30 auch fluchtend zu den vertikalen Versteifungsrippen 24 vorgesehen sein, wodurch schädliche Drehmomente vom Kupplungsglied 14 ferngehalten werden.

### Bezugszeichenliste

- 1: Kotflügel
- 2: Endteil
- 3: Mittelteil
- 4: Rad
- 5: Außenwand
- 6: Radraum
- 7: Seitenwand
- 8: vertikaler Bereich
- 9: Spritzlappen
- 10: Fahrbahn
- 11: Steg des Spritzlappens
- 12: unteres Ende des Kotflügels
- 14: Kupplungsglied
- 15: Rohr
- 16: Innenkontur des Rohres
- 17: Außenkontur des Kupplungsgliedes
- 18: Verdrehsicherung
- 19: Steg
- 20: rohrförmiger Grundkörper
- 21: Nut
- 22: Haltemittel
- 23: Gewindebohrung
- 24: vertikale Versteifungsrippe
- 25: horizontale Versteifungsrippe
- 26: Kiss-Off-Verbindung
- 30: dehnungselastisches Band
- 31: Nut
- 32: Boden der Nut
- 33: Kante
- α: Winkel des dehnungselastischen Bandes

## Patentansprüche

1. Kotflügel für ein Fahrzeug, insbesondere für einen Lastkraftwagen, wobei der Kotflügel (1) eine einen Radraum (6) teilweise umschließende Außenwand (5) aufweist, an die längs zum Fahrzeug gerichtete, zum Radraum (6) gezogene Seitenwände (7) angeformt sind, wobei der Kotflügel (1) mindestens ein als Rohr (15) ausgebildetes Haltemittel (15) aufweist, in das ein am Fahrzeug vorgesehenes, den Kotflügel (1) haltendes Kupplungsglied (14) eindringt, **dadurch gekennzeichnet, daß** das Rohr (15) im Radraum (6) vorgesehen ist, beide Seitenwände (7) durchdringt, an diesen einstükkig festgelegt ist und den in den Kotflügel (1) eindringenden Abschnitt des Kupplungsglieds (14) ummantelt.

2. Kotflügel nach Anspruch 1, **dadurch gekennzeichnet, daß** das Rohr (15) eine Verdrehsicherung (18) für das Kupplungsglied (14) aufweist.

3. Kotflügel nach Anspruch 2, **dadurch gekennzeichnet, daß** die Verdrehsicherung (18) von mindestens einer in das Rohr (15) eingeformten Nut (21) gebildet ist, die zu einem am Kupplungsglied (14) gehaltenen Steg (19) formschlüssig ausgebildet ist.

4. Kotflügel nach mindestens einem der Ansprüche 1 bis 3, **dadurch gekennzeichnet, daß** am Rohr (15) weitere, eine axiale Verschiebung des Kupplungsgliedes (14) verhindernde Haltemittel (22) vorgesehen sind.

5. Kotflügel nach mindestens einem der Ansprüche 1 bis 4, **dadurch gekennzeichnet, daß** das Rohr (15) an mindestens einer Stelle an der Außenwand (5) des Kotflügels (1) festgelegt ist.

6. Kotflügel nach mindestens einem der Ansprüche 1 bis 5, **dadurch gekennzeichnet, daß** das Rohr (15) an Versteifungsrippen (24, 25) der Außenwand (5) des Kotflügels (1) festgelegt ist.

7. Kotflügel nach mindestens einem der Ansprüche 1 bis 7, **dadurch gekennzeichnet, daß** zumindest das Rohr (15) aus Kunststoff besteht.

8. Kotflügel nach Anspruch 7, **dadurch gekennzeichnet, daß** das Rohr (15) mit der Kotflügelaußenwand (5) und den Seitenwänden (7) nach dem Drehsinterverfahren erstellt ist.

9. Kotflügel nach Anspruch 6 und 8, **dadurch gekennzeichnet, daß** das Rohr (15) mittels Kiss-Off-Verbindungen (26) an der Außenwand (5) des Kotflügels (1) festgelegt ist.

10. Kotflügel nach Anspruch 8 oder 9, **dadurch gekennzeichnet, daß** das Kupplungsglied (14) in das Rohr (15) eingeformt ist.

11. Kotflügel nach mindestens einem der Ansprüche 1 bis 10 oder nach dem Oberbegriff des Anspruchs 1, wobei der Kotflügel (1) von zwei jeweils von einem der Kupplungsglieder (14) durchdrungenen Endteilen (2) und einem Mittelteil (3) gebildet ist, die über dehnungselastische Bänder (30) miteinander verbunden sind, wobei zur Festlegung des dehnungselastischen Bandes (30) an der Außenwand (5) des Endteils (2) mindestens eine Nut (31) eingeformt ist, **dadurch gekennzeichnet, daß** die Wandung der Nut (31) am Rohr (15) festgelegt ist.

12. Kotflügel nach Anspruch 11, **dadurch gekennzeichnet, daß** das dehnungselastische Band (30) in einem vom Radraum (6) aus betrachtet stumpfen Winkel (α) geführt ist.

## Claims

1. Mudguard for a vehicle, in particular for a heavy-goods vehicle, the mudguard (1) having an outer wall (5) which partially surrounds a wheel space (6) and onto which are integrally formed side walls (7) directed longitudinally to the vehicle and drawn towards the wheel space (6), the mudguard (1) having at least one holding means (15) which is designed as a tube (15) and into which penetrates a coupling member (14) provided on the vehicle and holding the mudguard (1), **characterized in that** the tube (15) is provided in the wheel space (6), passes through the two side walls (7), is secured in one piece to these and encases that portion of the coupling member (14) which penetrates into the mudguard (1).

2. Mudguard according to Claim 1, **characterized in that** the tube (15) has a rotation-preventing device (18) for the coupling member (14).

3. Mudguard according to Claim 2, **characterized in that** the rotation-preventing device (18) is formed by at least one groove (21) which is integrally formed into the tube (15) and which is designed to fit positively with a web (19) held on the coupling member (14).

4. Mudguard according to at least one of Claims 1 to 3, **characterized in that** further holding means (22) preventing an axial displacement of the coupling member (14) are provided on the tube (15).

5. Mudguard according to at least one of Claims 1 to 4, **characterized in that** the tube (15) is secured to the outer wall (5) of the mudguard (1) at at least one point.

6. Mudguard according to at least one of Claims 1 to 5, **characterized in that** the tube (15) is secured to reinforcing ribs (24, 25) of the outer wall (5) of the mudguard (1).

7. Mudguard according to at least one of Claims 1 to 7, **characterized in that** at least the tube (15) consists of plastic.

8. Mudguard according to Claim 7, **characterized in that** the tube (15), together with the mudguard outer wall (5) and the side walls (7), is produced according to the rotary-sintering method.

9. Mudguard according to Claims 6 and 8, **characterized in that** the tube (15) is secured to the outer wall (5) of the mudguard (1) by means of kiss-off connections (26).

10. Mudguard according to Claim 8 or 9, **characterized in that** the coupling member (14) is integrally formed into the tube (15).

11. Mudguard according to at least one of Claims 1 to 10 or according to the precharacterizing clause of Claim 1, the mudguard (1) being formed by two end parts (2), through which one of the coupling members (14) passes in each case, and a middle part (3), which are connected to one another via stretch-elastic bands (30), at least one groove (31) being integrally formed on the outer wall (5) of the end part (2) in order to secure the stretch-elastic band (30), **characterized in that** the wall of the groove (31) is secured to the tube (15).

12. Mudguard according to Claim 11, **characterized in that** the stretch-elastic band (30) is guided at an obtuse angle (α), as seen from the wheel space (6).

## Revendications

1. Garde-boue pour un véhicule automobile, en particulier pour un camion, le garde-boue (1) présentant une paroi externe (5), enveloppant en partie un passage de roue (6) et sur laquelle sont conformées des parois latérales (7), dirigées dans le sens longitudinal par rapport au véhicule et tirées en direction du passage de roue (6), le garde-boue (1) présentant au moins un moyen de fixation (15) réalisé sous forme de tube (15), dans lequel pénètre un organe d'accouplement (14) prévu sur le véhicule et maintenant le garde-boue (1), **caractérisé en ce que** le tube (15) est prévu dans le passage de roue (6), pénètre au travers des deux parois latérales (7), est fixé d'une seule pièce sur ces dernières, et gaine la section de l'organe d'accouplement (14) qui pénètre dans le garde-boue (1).

2. Garde-boue suivant la revendication 1, **caractérisé en ce que** le tube (15) présente un blocage de rotation (18) pour l'organe d'accouplement (14).

3. Garde-boue suivant la revendication 2, **caractérisé en ce que** le blocage de rotation (18) est formé par au moins une rainure (21) conformée dans le tube (15), réalisée en coopération de forme avec une traverse (19) maintenue sur l'organe d'accouplement (14).

4. Garde-boue suivant l'une au moins des revendications 1 à 3, **caractérisé en ce que** d'autres moyens de fixation (22), empêchant un déplacement axial de l'organe d'accouplement (14), sont prévus sur le tube (15).

5. Garde-boue suivant l'une au moins des revendications 1 à 4, **caractérisé en ce que** le tube (15) est fixé en un emplacement au moins sur la paroi externe (5) du garde-boue (1).

6. Garde-boue suivant l'une au moins des revendications 1 à 5, **caractérisé en ce que** le tube (15) est fixé sur des nervures de renforcement (24, 25) de la paroi externe (5) du garde-boue (1).

7. Garde-boue suivant l'une au moins des revendications 1 à 7, **caractérisé en ce qu'**au moins le tube (15) se compose de matière plastique.

8. Garde-boue suivant la revendication 7, **caractérisé en ce que** le tube (15), avec la paroi externe (5) du garde-boue et les parois latérales (7), est réalisé suivant le procédé de frittage en moule rotatif.

9. Garde-boue suivant les revendications 6 et 8, **caractérisé en ce que** le tube (15) est fixé au moyen d'assemblage « kiss-off » (26) sur la paroi externe (5) du garde-boue (1).

10. Garde-boue suivant l'une des revendications 8 et 9, **caractérisé en ce que** l'organe d'accouplement (14) est conformé dans le tube (15).

11. Garde-boue suivant l'une au moins des revendications 1 à 10 ou suivant le préambule de la revendication 1, le garde-boue (1) étant formé par deux parties extrêmes (2) respectivement traversées par l'un des organes d'accouplement (14) et par une partie centrale (3), assemblées entre elles par l'intermédiaire de bandes (30) élastiques extensibles, au moins une rainure (31) étant conformée pour la fixation de la bande (30) élastique extensible sur la paroi externe (5) de la partie extrême (2), **caractérisé en ce que** la paroi de la rainure (31) est fixée sur le tube (15).

12. Garde-boue suivant la revendication 11, **caractérisé en ce que** la bande (30) élastique extensible est guidée sous un angle obtus (α), considéré à partir du passage de roue (6).
